**Europäisches Patentamt**

**European Patent Office**

**Office européen des brevets**

(19)

(11) Numéro de publication: **0 115 975 B1**

# (12) FASCICULE DE BREVET EUROPEEN

(45) Date de publication du fascicule du brevet:
**27.08.86**

(51) Int. Cl.⁴: **B 03 C 1/02** // G21C19/42

(21) Numéro de dépôt: **84400026.5**

(22) Date de dépôt: **06.01.84**

(54) **Filtre électromagnétique permettant une évacuation en continu des produits de filtration et procédé de filtrage utilisant un tel filtre.**

(30) Priorité: **11.01.83 FR 8300330**

(43) Date de publication de la demande:
**15.08.84 Bulletin 84/33**

(45) Mention de la délivrance du brevet:
**27.08.86 Bulletin 86/35**

(84) Etats contractants désignés:
**BE DE GB IT**

(56) Documents cités:
**DE - A - 2 806 340**
**FR - A - 2 341 347**
**FR - A - 2 447 744**
**GB - A - 1 204 324**
**US - A - 4 244 822**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Saudray, Didier, 5, Résidence Antony Real, F-84100 Orange (FR)**
Inventeur: **Auchapt, Pierre, "Sauveterre", F-30150 Roquemann (FR)**

(74) Mandataire: **Mongrédien, André et al, c/o BREVATOME 25, rue de Ponthieu, F-75008 Paris (FR)**

# Description

La présente invention a pour objet un filtre électromagnétique permettant une évacuation en continu des produits de filtration et un procédé de filtrage utilisant un tel filtre. Elle trouve une application notamment dans le retraitement des combustibles irradiés.

Dans une telle application une unité de filtrage doit répondre à des exigences particulières:

— en premier lieu, elle doit assurer une excellente clarification des solutions provement de la dissolution des matières à retraiter,

— elle doit permettre untrès bon rinçage des solides retenus dans le filtre et leur évacuation sous forme d'une suspension aqueuse,

— il est souhaitable qu'elle puisse travailler en continu,

— sa structure doit être telle qu'il n'y ait pas de pièces mécaniques en mouvement, que les conduits et traversées soient simples, sûrs et en nombre limité,

— elle doit avoir la capacité de traiter des solutions dont les suspensions sont à fort dégagement thermique, sans apporter de contraintes de conception ou d'exploitation excessives, ce qui est impératif pour le retraitement des solutions provenant des réacteurs à neutrons rapides.

Ces excigences ont conduit à utiliser, dans le passé, deux types d'appareils, à savoir les décanteuses pendulaires centrifuges (D.P.C.) et les filtres pulsés, les premières étant les plus répandues dans les usines de retraitement existantes. Pour les DPC, on doit reconnaître cependant que la clarification obtenue n'est pas excellente et que le rinçage des solides nécessite un arrêt de la fonction clarification. Par ailleurs, des pièces mécaniques sont en mouvement. Enfin, la réalisation de ces appareils est délicate et la possibilité de les employer avec des produits fortement exothermiques n'est pas démontrée.

Les filtres pulsés sont constitués par une cartouche en métal fritté à travers laquelle filtre la solution à clarifier; le principe de filtration est nettement différent de celui de la présente invention.

La présente invention concerne un filtre spécialement adapté à cette application dans la mesure où il permet l'évacuation des produits de filtration en continu (c'est-à-dire dans arrêt complet du filtre ou tout au moins sans arrêt prolongé, une pertubation de courte durée étant néanmoins inévitable) avec une installation simple, sans pièces en mouvement et s'accommodant parfaitement de la présence de produits exothermiques dans la solution.

Le filtre de l'invention est du type électromagnétique. On sait qu'un tel filtre est essentiellement constitué par une enveloppe en matériau non magnétique remplie d'un garnissage magnétisable et placée à l'intérieur d'un enroulement. Le passage d'un courant électrique dans l'enroulement provoque l'apparition d'un champ magnétique ayant pour effet de magnétiser le garnissage. Le garnissage peut être fixe, sous forme de bourre, de toile de fils d'acier ou d'empilement de grilles. Mais il est le plus souvent réalisé par un lit de billes d'acier.

L'applicaton d'unchamp magnétique aux billes du garnissage provoque leur magnétisation et, corrélativement, l'apparition de forts gradients de champ magnétique dans les espaces entre billes.

Lorsqu'un fluide chargé d'impuretés présentant des caractéristiques magnétiques convenables, à savoir une susceptibilité magnétique positive (corps paramagnétiques, ferromagnétiques), traverse le lit de billes ainsi aimantées, les impuretés sont transportées des zones à faible champ magnétique vers les zones à fort champ magnétique, c'est-à-dire vers les pôles magnétiques des billes. Par le jeu des forces magnétiques, les impuretés saccrochent sur les billes et le garnissage joue ainsi le rôle de filtre.

Jusqu'à présent de tels filtres électromagnétiques ont été proposés surtour dans les réacteurs nucléaires où ils peuvent prendre place soit dans les circuits primaires, soit dans les circuits secondaires.

Le filtre de l'invention est de ce type et, à ce titre, il comprend une section de filtration constituée d'un garnissage magnétisable associé à un moyen d'application d'un champ magnétique, un conduit d'introduction d'une solution chargée en produits à filtrer débouchant à la partie supérieure de cette section et un conduit d'extraction de la solution clarifiée débouchant à la partie inférieure de la section, voir le US-A-4 244 822. Selon l'invention, ce filtre est caractérisé par le fait qu'il comprend en outre, disposée audessus de la section de filtration, une section d'évacuation des produits de filtration, cette section étant constituée d'un garnissage magnétisable associé à un moyen d'application d'un champ magnétique réglable, cette section d'évacuation possédant un conduit d'évacuation débouchant à sa partie supérieure; le filtre comprend en outre une jambe de pulsation débouchant à la partie inférieure de la section de filtration et apte à produire au moins une pulsation comprenant une première phase dans laquelle la colonne de solution présente dans le filtre est soumise à un mouvement ascendant et une seconde phase dans laquelle cette colonne est soumise à un mouvement descendant.

De préférence, les moyens d'application des champs magnétiques aux garnissages des sections de filtration et d'évacuation sont réglables en synchronisme avec la pulsation, de telle sorte que ces champs soient aptes à provoquer, dans les garnissages des deux sections, la filtration de la solution qui les traverse pendant la seconde phase de la pulsation et que ces champs soient réduits à une valeur qui permet leur entraînement pendant la première phase.

De préférence encore, le filtre de l'invention comprend en outre au moins une section de lavage à contre-courant des produits évacués, cette section étant disposée entre la section de filtration et la section d'évacuation et constituée par un garnissage magnétisable associé à un moyen d'application d'un champ magnétique réglable en synchronisme avec les champs appliqués aux garnissages de section de filtration et d'évacuation, cette section de lavage possédant un conduit d'introduction d'une solution de lavage débouchant à la partie supérieure de ladite section.

De préférence encore, la pulsation est asymétrique et comprend une première phase dans laquelle la colonne de solution présente dans le filtre est soumise à un mouvement ascendant rapide et une seconde phase dans laquelle cette colonne est soumuse à un mouvement descendant lent.

La présente invention a également pour objet un procédé de filtrage d'une solution chargée en produits à filtrer. Le procédé est du genre de ceux dans lesquels on introduit cette solution à la partie supérieure d'une section de filtration constituée d'un garnissage magnétisable auquel on applique un champ magnétique et on extrait une solution clarifiée à la base de cette section. Ce procédé est caractérisé en ce qu'on effectue en outre une opération d'évacuation des produits de filtration qui consiste à appliquer à la base de la section de filtration une pulsation comprenant une première phase dans laquelle la solution contenue dans le filtre est soumise à un mouvement ascendant qui fait traverser à au moins une partie de la solution une section d'évacuation disposée au-dessus de la section de filtration et composée d'un garnissage magnétisable auquel on applique un champ magnétique réglable, et une seconde phase dans laquelle la solution est soumise à un mouvement descendant qui fait retraverser à ladite partie le garnissage de la section d'évacuation, l'évacuation des produits de filtration s'effectuant par la partie supérieure de la section d'évacuation.

De préférence, on applique aux garnissages un champ magnétique apte à provoquer dans ceux-ci une filtration pendant la seconde phase de la pulsation et un champ magnétique réduit apte à diminuer cette filtration pendant la première phase de la pulsation.

Dans un cas particulier, on applique un champ magnétique nul aux garnissages pendant la première phase de la pulsation.

De préférence encore, la pulsation est asymétrique et comprend un mouvement ascendant rapide et un mouvement descendant lent.

De préférence, on effectue en outre une opération de lavage à contre-courant des produits de filtration évacués, qui consiste à faire traverser à la solution, au cours de la première phase de la pulsation, au moins une section de lavage disposée entre la section de filtration et la section d'évacuation, cette section de lavage étant composé d'un garnissage magnétisable auquel on applique un champ magnétique réglable, et on introduit à la partie supérieure de cette section de lavage une solution de lavage.

Les caractéristiques et avantages de l'invention apparaîtront mieux après la description qui suit, d'exemples de réalisation donnés à titre explicatif et nullement limitatif. Cette description se réfère à des dessins annexés sur lesquels:

la figure 1 représente une variante simple du filtre de l'invention, dans laquelle une section de filtration est surmontée d'une section d'évacuation,

la figure 2 représente une variante comprenant en outre une section de lavage,

la figure 3 représente une variante plus élaborée avec deux sections de lavage,

la figure 4 représente un filtre dans lequel les fonctions de clarification et de lavage sont remplies par des filtres différents placés en série,

la figure 5 illustre enfin les différentes phases du procédé de l'invention et permet de comprendre el fonctionnement du filtre.

A titre explicatif, dans la description qui suit, on supposera la pulsation asymétrique, et formée d'un mouvement ascendant rapide et d'un mouvement descendant lent.

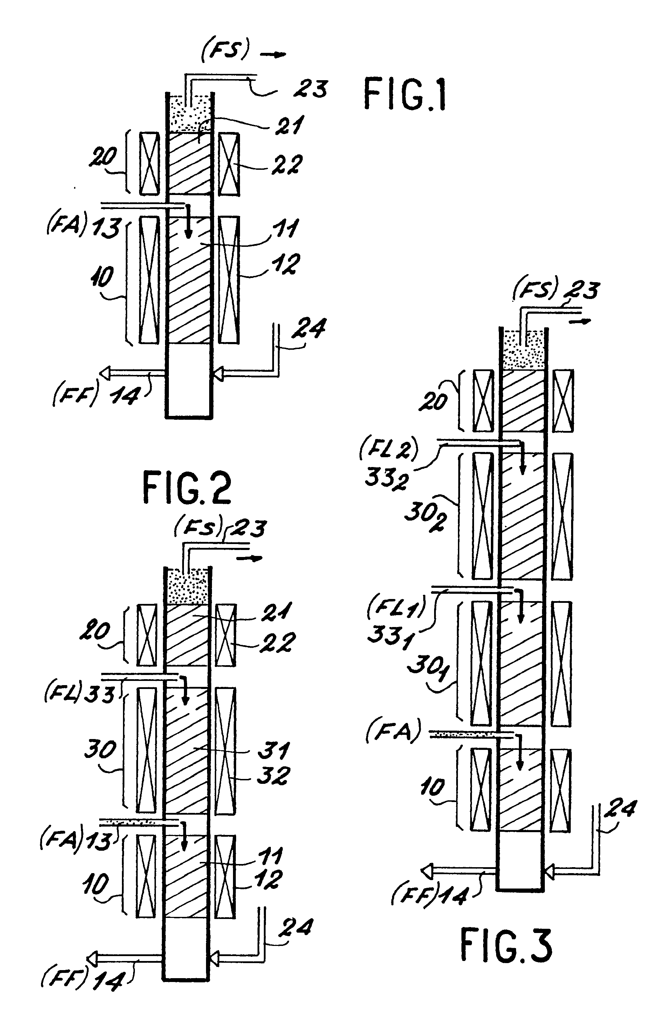

Le filtre électromagnétique représenté sur la figure 1 comprend, de manière classique, une section de filtration 10 constituée d'un garnissage magnétisable 11 associé à un moyen d'application d'un champ magnétique 12. Cette section est reliée à un conduit d'introduction d'une solution chargée en produits à filtrer 13 débouchant à la partie supérieure et un conduit d'extraction de la solution clarifiée 14 débouchant à la partie inférieure de la section. Les flux de ces deux solutions sont notés respectivement FA et FF. Le filtre représenté est caractérisé par le fait qu'il comprend en outre, disposée au-dessus de la section de filtration 10, une section d'évacuation des produits de filtration 20, cette dernière étant constituée d'un garnissage magnétisable 21 associé à un moyen d'application d'un champ magnétique réglable 22. Cette section d'évacuation possède un conduit d'évacuation 23 débouchant à sa partie supérieure. Par aileurs, le filtre comprend une jambe de pulsation 24 débouchant à la partie inférieure de la section de filtration 10. Cette jambe est apte à produire au moins une pulsation asymétrique comprenant une première phase dans laquelle la colonne de solution présente dans le filtre est soumise à un mouvement ascendant rapide et une seconde phase dans laquelle cette colonne est soumise à un mouvement descendant lent.

Dans la variante illustrée sur la figure 2, le filtre comprend en outre une section 30 de lavage à contre-courant des produits évacués, cette section étant disposée entre la section de filtration 10 et la section d'évacuation 20. Elle est constituée par un garnissage magnétisable 31 associé à un moyen d'application d'un champ magnétique réglable 32 commandé en synchronisme avec les champs appliqués aux garnissages 11 et 21 des sections de filtration et d'évacuation; cette section de lavage 30 possède un conduit d'introduction 33 d'une solution de lavage débouchant à la partie supérieure de ladite section, le flux de la solution de lavage étant noté FL.

Sur la figure 3 est représenté un filtre selon l'invention qui est caractérisé en ce qu'il comprend plusieurs sections de lavage superposées $30_1$, $30_2$, chacune alimentée en solution de lavage par un conduit particulier $33_1$, $33_2$ (par exemple une solution acide et de l'eau).

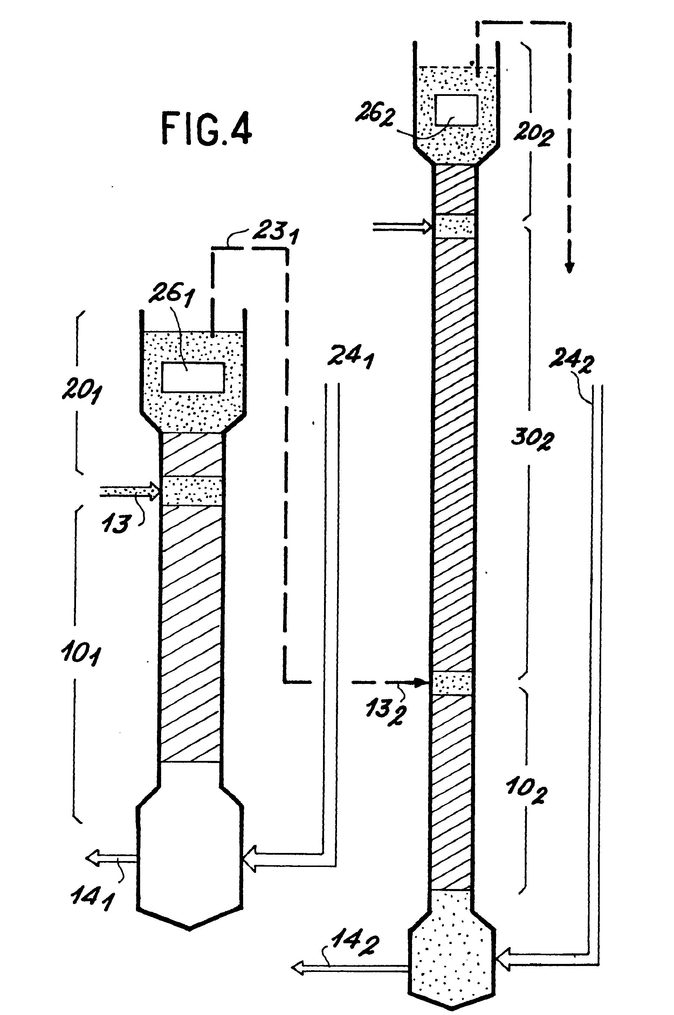

Le filtre représenté sur la figure 4 comprend un premier filtre sans section de lavage (section de filtration $10_1$ et d'évacuation $20_1$) et un second filtre avec une section de lavage $30_2$, le conduit d'évacuation $23_1$ du premier filtre étant relié au conduit d'introduction de la solution chargée du second $13_2$. Cette disposition permet d'adapter les dimensions des filtres à leur fonction et en particulier de donner à la section de lavage $30_2$ une section plus faible que celle de la section de filtration $10_1$.

Sur la figure 4, les moyens $26_1$, $26_2$ disposés à la partie supérieure des filtres sont des moyens d'agitation de la solution destinés à maintenir en suspension les produits solides.

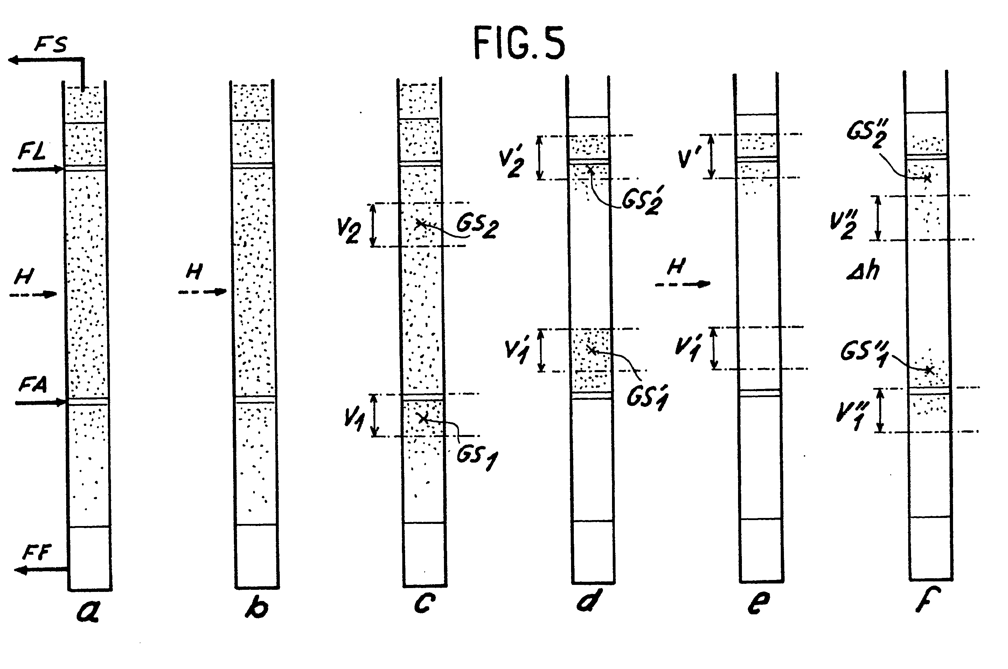

La figure 5 représente les différentes phases de fonctionnement du filtre de l'invention, dans le cas où la section de lavage est présente. Dans sa variante la plus élaborée, le fonctionnement comprend six phases représentées par les schémas a à f.

**phase a:**

c'est le régime permanent, avec un flus FA de solution chargée, un flux FF de solution clarifiée, un flux FL de solution de lavage, un flux FS de solution d'évacuation des solides lavés; pendant cette phase un champ magnétique H est appliqué aux garnissages des différentes sections;

**phase b:**

les flux FA, FL et FS sont coupés;

**phase c:**

le champ magnétique est coupé; des volumes $V_1$ et $V_2$ sont marqués sur le dessin, dont on va suivre les déplacements dans les phases ultérieures; le centre de gravité des solides présents dans ces volumes sont notés $GS_1$ et $GS_2$; dans cette phase c ces centres de gravité sont naturellement confondus avec les centres géométriques des volumes; .

**phase d:**

la première phase de la pulsation asymétrique est appliquée; elle déplace brutalement la colonne de liquide vers le haut; les volumes $V_1$ et $V_2$ se retrouvent en $V'_1$ et $V'_2$; les centres de gravité $GS'_1$ et $GS'_2$ des produits en suspension peuvent se trouver légèrement plus bas que les centres géométriques du fait de la difficulté plus grande que ces produits rencontrent à la traversée des garnissages ou d'un retard à leur décrochage initial du garnissage; on observera que cette première phase de la pulsation asymétrique permet d'arracher les produits de filtration qui colmatent le garnissage de la section de filtration, de remonter ces produits dans la section de lavage et de faire passer les produits situés à la partie supérieure de cette section de lavage (du fait de pulsations antérieures), dans la section d'évacuation;

**phase e:**

le champ magnétique est rétabli dans les garnissages; les propriétés de filtrage de ces garnissages sont restituées, ce qui permet de fixer les solides en suspension;

**phase f:**

la seconde phase de pulsation asymétrique est appliquée; elle provoque une descente lente de la colonne de liquide, les solides en suspension étant retenus dans les garnissages; les centres de gravité $GS''_1$ et $GS''_2$ de ces solides sont maintenant situés au-dessus des volumes de liquide revenus en positions $V''_1$, $V''_2$; globalement, les solides ont donc été déplacés vers le haut du filtre.

La répétition d'un tel cycle permet donc de faire passer progressivement les solides de la section de filtration à la section de rinçage, avec un lavage à contre-courant dans toute la section de lavage (la solution de lavage circule de haut en bas et les solides de bas en haut).

Dans l'exemple illustré, la champ magnétique est nul pendant la première phase de la pulsation, pour permettre aux slides de remonter à travers les garnissages. Mais cette situation extrême n'est pas obligatoire: il est possible de réduire seulement le champ, sans l'annuler. Dans certains cas, il est même possible de le maintenir à sa valeur nominale, si la dissymétrie entre le mouvement ascendant et le mouvement descendant de la colonne est suffisamment marquée et autorise l'entraînement des solides piégés dans le garnissage au cours de la montée du liquide.

**Revendications**

1. Filtre électromagnétique, du genre de ceux qui comprennent une section de filtration (10) constituée d'un garnissage magnétisable (11) associé à un moyen d'application d'un champ magnétique (12), un conduit d'introduction d'une solution chargée en produits à filtrer (13) débouchant à la partie supérieure cette section et un conduit d'extraction de la solution clarifiée (14) débouchant à la partie inférieure de la section, ce filtre étant caractérisé par le fait qu'il comprend en outre, disposée au-dessus de la section de filtration, une section d'évacuation des produits de filtration (20), cette section étant constituée d'un garnissage magnétisable (21) associé à un moyen d'application d'un champ magnétique réglable (22), cette section d'évacuation possédant un conduit d'évacuation (23) débouchant à sa partie supérieure, et par le fait qu'il comprend une jambe de pulsation (24) débouchant à la partie inférieure de la section de filtration (10), cette jambe étant apte à produire au moins une pulsation comprenant une première phase dans laquelle la colonne de solution présente dans le filtre est soumise à un mouvement ascendant et une seconde phase dans laquelle cette colonne est soumise à un mouvement descendant.

2. Filtre électromagnétique selon la revendication 1, caractérisé par le fait que les moyens (12, 22) d'application des champs magnétiques aux garnissages (11, 21) des sections de filtration et d'évacuation sont réglables en synchronisme avec la pulsation, de telle sorte que ces champs soient aptes à provoquer dans les garnissages des deux sections, la filtration de la solution qui les traverse pendant la seconde phase de la pulsation et réduits à une valeur qui diminue cette filtration pendant la première phase.

3. Filtre électromagnétique selon l'une quelconque des revendications 1 et 2, caractérisé par le fait qu'il comprend en outre au moins une section (30) de lavage à contre-courant des produits évacués, cette section étant disposée entre la section de filtration (10) et la section d'évacuation (20) et constituée par un garnissage magnétisable (31) associé à un moyen (32) d'application d'un champ magnétique réglable en synchronisme avec les champs appliqués aux garnissages (11, 21) des sections de filtration et d'évacuation, cette section de lavage (30) possédant un conduit (33) d'introduction d'une solution de lavage débouchant à la partie supérieure de ladite section.

4. Filtre électromagnétique selon la revendication 3, caractérisé en ce qu'il comprend plusieurs sections de lavage superposées (30₁, 30₂) chacune alimentée par un conduit (33₁, 33₂) parcouru par une solution de lavage particulière.

5. Filtre électromagnétique selon l'une quelconque des revendications 1 et 2 et selon la revendication 3, caractérisé en ce qu'il comprend un premier filtre sans section de lavage (10₁, 20₁), et un second filtre avec au moins une section de lavage (10₂, 20₂, 30₂), le conduit d'évacuation (23₁) du premier filtre étant relié au conduit d'introduction de la solution chargée du second (13₂).

6. Filtre électromagnétique selon la revendication 2, caractérisé en ce que la section de lavage présente une section plus faible que celle de la section de filtration.

7. Filtre électromagnétique selon l'une quelconque des revendications 1 à 6, caractérisé en ce que la pulsation produite par la jambe est asymétrique et provoque un mouvement ascendant rapide de la colonne de solution présente dans le filtre et un mouvement descendant lent de cette colonne.

8. Procédé de filtrage d'une solution chargée en produits magnétiques au moyen d'un filtre conforme à la revendication 1, procédé du genre de ceux dans lesquels on introduit cette solution à la partie supérieure d'une section de filtration (10) constituée d'un garnissage magnétisable (11) auquel on applique un champ magnétique et on extrait une solution clarifiée à la base de cette section, caractérisé en ce qu'on effectue en outre une opération d'évacuation des produits de filtration qui consiste à appliquer à la base de la section de filtration une pulsation comprenant une première phase dans laquelle la solution contenue dans le filtre est soumise à un mouvement ascendant qui fait traverser à au moins une partie de la solution une section d'évacuation (20) disposée au-dessus de la section de filtration et composée d'un garnissage magnétisable (21) auquel on applique un champ magnétique réglable, et une seconde phase dans laquelle la solution est soumise à un mouvement descendant qui fait retraverser à ladite partie le garnissage de la section d'évacuation, l'évacuation des produits de filtration s'effectuant par la partie supérieure de la section d'évacuation.

9. Procédé selon la revendication 8, caractérisé en ce qu'on applique aux garnissages un champ magnétique apte à provoquer dans ceux-ci une filtration pendant la seconde phase de la pulsation et un champ magnétique réduit apte à diminuer cette filtration pendant la première phase de la pulsation.

10. Procédé selon la revendication 9, caractérisé en ce qu'on applique aux garnissages un champ magnétique nul pendant la première phase de la pulsation.

11. Procédé selon l'une quelconque des revendications 8 à 10, caractérisé en ce qu'on effectue en outre une opération de lavage à contre-courant des produits de filtration évacués, qui consiste à faire traverser à la solution, au cours de la première phase de la pulsation, au moins une section de lavage disposée entre la section de filtration et la section d'évacuation, cette section de lavage étant composée d'un garnissage magnétisable auquel on applique un champ magnétique réglable, et à introduire à la partie supérieure de cette section de lavage une solution de lavage.

12. Procédé selon l'une quelconque des revendications 8 à 11, caractérisé en ce que la pulsation appliquée à la base de la section de filtration est asymétrique et comprend une première phase ascendante rapide et une seconde phase descendante lente.

## Patentansprüche

1. Elektromagnetfilter bestehend aus einem Filtrierabschnitt (10), der aus einer mit einer Einrichtung zur Anlegung eines Magnetfeldes (12) verbundenen magnetisierbaren Auskleidung (11) besteht, einer am oberen Teil dieses Abschnittes einmündenden Leitung zur Einführung einer mit Filtriergut (13) geladenen Lösung und einer am unteren Teil des Abschnittes einmündenden Leitung zur Abnahme der abgeklärten Lösung (14), dadurch gekennzeichnet, dass es ausserdem einen oberhalb des Filtrierabschnittes angeordneten Abschnitt zur Entleerung des Filtrats (20) aufweist, der aus einer mit einer Einrichtung zur Anlegung eines regelbaren Magnetfeldes (22) verbundenen magnetisierbaren Auskleidung (21) besteht und eine an seinem oberen Teil einmündende Entleerungsleitung (23) aufweist, und dass es ein am unteren Teil des Filtrierabschnittes (10) einmündendes Pulsierungsbein (24) aufweist, das mindestens eine aus einer ersten Phase, in der die im Filter vorhandene Lösungssäule einer aufsteigenden Bewegung unterworfen wird, und einer zweiten Phase, in der diese Säule einer abwärts gerichteten Bewegung unterworfen wird, bestehende Pulsierung erzeugen kann.

2. Elektromagnetfilter gemäss Anspruch 1, dadurch gekennzeichnet, dass die jeweiligen Einrichtungen (12, 22) zur Anlegung eines Magnetfeldes an die Auskleidung (11, 21) des Filtrier- bzw. Entleerungsabschnittes derart mit der Pulsierung synchron regelbar sind, dass diese Felder in den Auskleidungen der zwei Abschnitte die Filtrierung der Lösung, die sie während der zweiten Pulsierungsphase durchquert, einleiten können und dass diese Felder auf eine diese Filtrierung während der ersten Phase verringernden Wert reduziert werden.

3. Elektromagnetfilter gemäss irgendeinem der Ansprüche 1 und 2, dadurch gekennzeichnet, dass es ausserdem mindestens einen Gegenstromauswaschungsabschnitt (30) für die entleerten Produkte aufweist, der zwischen dem Filtrierabschnitt (10) und dem Entleerungsabschnitt (20) angeordnet ist und aus einer mit einer Einrichtung (32) zur Anlegung eines mit den jeweils an die Auskleidung (11, 21) des Filtrier- bzw. Entleerungsabschnittes angelegten Felder synchron regelbaren Magnetfeldes verbundenen magnetisierbaren Auskleidung (31) besteht, wobei dieser Auswaschungsabschnitt (30) eine am oberen Teil des besagten Abschnittes einmündende Leitung (33) zur Einführung einer Waschlösung aufweist.

4. Elektromagnetfilter gemäss Anspruch 3, dadurch gekennzeichnet, dass es mehrere übereinanderliegende Auswaschungsabschnitte (30₁, 30₂) aufweist, die jeweils von einer von einer besonderen

Waschlösung durchströmten Leitung $(33_1, 33_2)$ gespeist werden.

5. Elektromagnetfilter gemäss irgendeinem der Ansprüche 1 und 2 und gemäss Anspruch 3, dadurch gekennzeichnet, dass ein erstes Filter ohne Auswaschungsabschnitt $(10_1, 20_1)$ und ein zweites Filter mit mindestens einem Auswaschungsabschnitt $(10_2, 20_2, 30_2)$ aufweist, wobei die Entleerungsleitung $(23_1)$ des ersten Filters mit der Leitung zur Einführung der geladenen Lösung des zweiten Filters $(13_2)$ verbunden ist.

6. Elektromagnetfilter gemäss Anspruch 2, dadurch gekennzeichnet, dass der Auswaschungsabschnitt einen kleineren Querschnitt als der des Filtrierabschnittes aufweist.

7. Elektromagnetfilter gemäss irgendeinem der Ansprüche 1 bis 6, dadurch gekennzeichnet, dass die durch das Bein erzeugte Pulsierung asymmetrisch ist und eine rasche aufsteigende Bewegung der im Filter vorhandenen Lösungssäule und eine langsame abwärts gerichtete Bewegung dieser Säule einleitet.

8. Verfahren zum Filtrieren einer mit magnetischen Produkten geladenen Lösung mittels eines Filters gemäss Anspruch 1, bei dem diese Lösung am oberen Teil eines Filtrierabschnittes (10) bestehend aus einer magnetisierbaren Auskleidung (11), an die ein Magnetfeld angelegt wird, eingeführt und eine abgeklärte Lösung am Fuss dieses Abschnittes abgenommen wird, dadurch gekennzeichnet, dass ausserdem ein Entleerungsschritt für das Filtrat vorgenommen wird, bei dem an den Fuss des Filtrierabschnittes eine Pulsierung angelegt wird, die aus einer ersten Phase, in der die im Filter enthaltene Lösung einer aufsteigenden Bewegung unterworfen wird, die mindestens einen Teil der Lösung einen oberhalb des Filtrierabschnittes angeordneten Entleerungsabschnitt (20) durchqueren lässt, der aus einer magnetisierbaren Auskleidung (21), an die ein regelbares Magnetfeld angelegt wird, besteht, und einer zweiten Phase, in der die Lösung einer abwärts gerichteten Bewegung unterworfen wird, die den besagten Teil die Auskleidung des Entleerungsabschnittes nochmals durchqueren lässt, besteht, wobei die Entleerung des Filtrats durch den oberen Teil des Entleerungsabschnittes erfolgt.

9. Verfahren gemäss Anspruch 8, dadurch gekennzeichnet, dass an die Auskleidungen ein Magnetfeld, das darin eine Filtrierung während der zweiten Pulsierungsphase einleiten kann, und ein reduziertes Magnetfeld, das diese Filtrierung während der ersten Pulsierungsphase verringern kann, angelegt werden.

10. Verfahren gemäss Anspruch 9, dadurch gekennzeichnet, dass während der ersten Pulsierungsphase ein Null-Magnetfeld an die Auskleidungen angelegt wird.

11. Verfahren gemäss irgendeinem der Ansprüche 8 bis 11, dadurch gekennzeichnet, dass ausserdem ein Gegenstromauswaschungsschritt an dem entleerten Filtrat vorgenommen wird, bei dem die Lösung im Laufe der ersten Pulsierungsphase mindestens einen zwischen dem Filtrierabschnitt und dem Entleerungsabschnitt angeordneten Auswaschungsabschnitt durchqueren muss, der aus einer magnetisierbaren Auskleidung, an die ein regelbares Magnetfeld angelegt wird, besteht, und eine Waschlösung am oberen Teil dieses Auswaschungsabschnittes eingeführt wird.

12. Verfahren gemäss irgendeinem der Ansprüche 8 bis 11, dadurch gekennzeichnet, dass die an den Fuss des Filtrierabschnittes angelegte Pulsierung asymmetrisch ist und eine rasche aufsteigende erste Phase und eine langsame abwärts gerichtete zweite Phase umfasst.

## Claims

1. An electromagnetic filter, of the kind comprising a filtration section (10) in the form of a magnetizable packing (11) associated with a magnetic field application means (12), a conduit for the introduction of a solution charged with products for filtration (13) discharging at the top of said section and a clarified solution extraction conduit (14) discharging at the bottom part of the section, said filter being characterised in that it also comprises, disposed above the filtration section, a filtration products discharge section (20), said section being in the form of a magnetizable packing (21) associated with an adjustable magnetic field application means (22), said discharge section having a discharge conduit (23) discharging at its top part, and in that it comprises a pulsation leg (24) discharging at the bottom part of the filtration section (10), said leg being adapted to produce at least one pulsation comprising a first phase in which the column of solution present in the filter is subjected to an ascending movement and a second phase in which said column is subjected to a descending movement.

2. An electromagnetic filter according to claim 1, characterised in that the means (12, 22) for applying magnetic fields to the packings (11, 21) of the filtration and discharge sections are adjustable in synchronism with the pulsation so that said fields are adapted to produce, in the packings of the two sections, filtration of the solution flowing through them during the second phase of the pulsation and reduced to a value which decreases said filtration during the first phase.

3. An electromagnetic filter according to claim 1 or 2, characterised in that it also comprises at least one discharged product counter-current whashing section (30), which is disposed between the filtration section (10) and the discharge section (20) and is in the form of a magnetizable packing (31) associated with a means (32) for applying a magnetic field adjustable in synchronism with the fields applied to the packings (11, 21) of the filtration and discharge sections, said washing section (30) having a washing solution inlet conduit (33) discharging at the top part of said section.

4. An electromagnetic filter according to claim 3, characterised in that it comprises a plurality of superposed washing sections $(30_1, 30_2)$ each fed by a conduit $(33_1, 33_2)$ carrying its own washing solution.

5. An electromagnetic filter according to claim 1 or 2 and according to claim 3, characterised in that it comprises a first filter without a washing section ($10_1$, $20_1$) and a second filter with at least one washing section ($10_2$, $20_2$, $30_2$), the discharging conduit ($23_1$) of the first filter being connected to the charged solution inlet conduit of the second ($13_2$).

6. An electromagnetic filter according to claim 2, characterised in that the washing section is of smaller section than the filtration section.

7. An electromagnetic filter according to any one of claims 1 to 6, characterised in that the pulsation produced by the leg is asymmetrical and produces a fast ascending movement of the column of solution present in the filter and a slow descending movement of said column.

8. A method of filtering a solution charged with magnetic products, by means of a filter according to claim 1, the method being of the kind in which said solution is introduced at the top part of a filtration section (10) in the form of a magnetizable packing (11) to which a magnetic field is applied and a clarified solution is extracted at the base of said section, characterised in that a filtration products discharge operation is also carried out comprising applying to the base of the filtration section a pulsation comprising a first phase in which the solution contained in the filter is subjected to an ascending movement which causes at least part of the solution to flow through a discharge section (20) disposed above the filtration section and consisting of a magnetizable packing (21) to which an adjustable magnetic field is applied, and a second phase in which the solution is subjected to a descending movement which causes the said part to flow again through the packing of the discharge section, discharge of the filtration products being effected via the part of the discharge section.

9. A method according to claim 8, characterised in that there is applied to the packings a magnetic field adapted to produce therein a filtration during the second phase of the pulsation and a reduced magnetic field adapted to reduce said filtration during the first phase of the pulsation.

10. A method according to claim 9, characterised in that a zero magnetic field is applied to the packings during the first phase of the pulsation.

11. A method according to any one of claims 8 to 10, characterised in that a discharged filtration products counter-current washing operation is also effected comprising passing the solution, during the first phase of the pulsation, through at least one washing section disposed between the filtration section and the discharge section, said washing section being in the form of a magnetizable packing to which an adjustable magnetic field is applied, and introducing a washing solution at the top part of said washing section.

12. A method according to any one of claims 8 to 11, characterised in that the pulsation applied to the base of the filtration section is asymmetrical and comprises a fast ascending first phase and a slow descending second phase.

FIG.1

FIG.2

FIG.3

FIG.4

0 115 975

# FIG.5

FS

FL

H

FA

FF

a

H

b

$V_2$   × GS$_2$

$V_1$   ×   GS$_1$

c

$V_2'$   GS$_2'$

$V_1'$   × GS$_1'$

d

$V'$

H

$V_1'$

e

GS$_2''$   ×

$V_2''$

$\Delta h$

GS$_1''$   ×

$V_1''$

f